# EUROPEAN PATENT SPECIFICATION

(11) **EP 2 180 739 B1**
(45) Date of publication and mention of the grant of the patent: **14.07.2010**
(21) Application number: 08018665.3
(22) Date of filing: 24.10.2008
(51) Int. Cl.: H04W 16/32, H04W 16/10

(54) **Coordination of radio resource allocation in a macro/microcell mobile communication system**
Koordination der Funkressourcenzuteilung in einem Makro-/Mikrozellen-Funkkommunikationssystem
Coordination d'allocation de resources radio dans dans un système radio macro-/microcellulaire

(43) Date of publication of application: 28.04.2010
(73) Proprietor: NTT DoCoMo, Inc., Chiyoda-Ku Tokyo 100-6150 (JP)
(72) Inventor: Cosovic, Ivan, 80339 München (DE)
(74) Representative: Zinkler, Franz

(56) References cited:
- GB-A- 2 446 196
- US-A- 5 920 819
- NORTEL: "Macro-Home eNB neighboring Paradigm" 3GPP DRAFT; R3-071577_MACRO-HOME ENB NEIGHBORING PARADIGM_13.2.5C_HNBNEIGH.REV0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_57\docs, no. Athens, Greece; 20070820, 15 August 2007 (2007-08-15), XP050162392
- MOTOROLA: "Text proposal for TR3.020" 3GPP DRAFT; R3-071981, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_57bis\docs, no. Sophia Antipolis, France; 20071008, 10 October 2007 (2007-10-10), XP050162762
- 3RD GENERATION PARTNERSHIP PROJECT; TECHNICAL SPECIFICATION GROUP RADIO ACCESS NETWORK (E-UTRAN): "X2 general aspects and principles (Release 8)" 3GPP TS 36.420 V8.0.0 (2007-12), 1 December 2007 (2007-12-01), XP002522290

## Description

The present invention is in the field of mobile communication systems, especially in networks utilizing hierarchical cell structures.

Present mobile communication systems utilize a variety of different radio resources, among them, for example, frequencies in terms of carriers or subcarriers, time slots, spreading codes or sequences, interleaving sequences, spatial subchannels, etc. With the growing variety of radio resources, more and more complex allocation algorithms and methods are developed. Moreover, network topology is changing or advancing to hierarchical structures.

Present systems also allow a deployment of so-called micro, pico and/or femto cells which are small radio cells deployed on top of regular radio cells, for example for covering home environments.

A problem arises from conventional systems, which is related to interference between femto-cell user equipment (FUE = Femto-cell User Equipment) and macro-cell user equipment (MUE = Macro-cell User Equipment) using the same resources. In other words, modern networks allow deployment of small base-stations, i.e. FUEs, which can be used in home environments. This enables usage of regular cell phones or mobile devices in the home environment as well. However, since these FUEs cannot be efficiently coordinated by the operators of mobile communication systems, problems with interference coordination and mitigation arise. FUEs are not directly connected to the backbone of mobile communication systems, preventing seamless connection to, for example, the control plane of the communication network.

Femto-cells are mini plug-and-play home base-stations that share radio resources with macro-cells. The term macro-cells refers to conventional cells of a cellular mobile communication system. Femto-cells are intended to enhance the coverage of for example LTE (LTE = Long Term Evolution) and LTE-A (LTE-A = LTE-Advanced) in the home environment. Femto-cell base-stations (FBS = Femto-cell Base-Station) and FUEs cause interference on macro-cell base-stations (MBS = Macro-cell Base-Station) and MUEs. The opposite may also happen, i.e., the MBS and MUEs may cause interference to the MUEs and FUEs. Interference in such scenarios, i.e., due to femto-cell deployment is a major concern in conventional mobile communication systems.

GB 2 446 196 A describes a macro base-station-micro-base-station scenario where the micro base-station is configured to receive signals from the macro base-station on a frequent basis. The macro base-station carries out measurements of these signals in order to determine changes in the radio environment and adapt to the changes.

US 5,920,819 provides a carrier frequency assignment scheme in a macro-cell-micro-cell-scenario. The micro cell carries out threshold detection to determine the frequencies used for the carriers of the macro cell and then assigns a carrier frequency, which does not exceed the threshold to a mobile station then being connected to the micro cell.

It is the object of the present invention to provide an improved concept for interference coordination in mixed macro/femto-cell communication systems.

The object is achieved by the subject-matter disclosed by the independent claims.

The present invention is based on the finding that resource allocation between macro- and femto-cells can be coordinated. Direct signalling may be employed in embodiments, by, for example, using conventional messages which may be extended. Signalling may for example be carried out through a backbone network or through the air-interface. In other embodiments indirect signalling may be utilized, based on the finding that femto-cell base-stations may overhear or eavesdrop interference coordination messages between macro-cell base-stations.

One finding of the present invention is that interference coordination or mitigation between macro- and femto-cells can be carried out by providing femto-cells with an information on which resources it shall use or which resources are occupied by either other femto-cells or a macro-cell. Provision of such information may by dedicated and/or explicit, i.e. a message containing such information may be directed directly to a femto-cell, e.g. by means of an unambiguous addressing. Provision of such information may be implicit and/or broadcast or addressed to a third cell, the femto-cell may then overhear, eavesdrop or sniff on a communication between a macro-cell and any other cell and determine interference coordination between them, based on which it may coordinate the resources it uses by its own. The other cell, to which the information may actually be addressed can be another macro-cell or another femto-cell.

Therewith, femto-cells may still share resources with macro-cells and can still be used to enhance, for example, the coverage of LTE or LTE-A in home environments. Interference due to femto-cells can be coordinated by embodiments with advantages arising from a higher system capacity and better service quality.

Embodiments are based on the finding that spatial separation between MUEs and FUEs sharing the same resources is beneficial for interference reduction. Spatial separation can therefore be utilized for interference coordination. The spatial separation can, for example, be achieved by allocating the resources with the assistance of signalling messages from MBS to FBS, in which resources that are e.g. used by MUEs close to specific FBS are indicated so to prevent FBS from reusing such resources.

Embodiments may have minimal or limited impact on existing standards, for example, in terms of messages or messaging within LTE. Generally, embodiments may be employed in cellular systems, which utilize femto-cells. Embodiments may address resource allocation in the uplink, as well as in the downlink. In other words, interference coordination may be carried out by embodiments for both transmission directions, i.e., for the uplink and the downlink, the reverse link or the forward link respectively. Interference coordination can be established between femto- and macro-cells and between FUE and MUE.

Embodiments of the present invention will be detailed using the accompanying figures, in which
Fig. 1a shows an embodiment of a base-station transceiver;
Fig. 1b shows another embodiment of a base-station transceiver;
Fig. 1c illustrates a femto-cell deployment within a macro-cell;
Fig. 2 illustrates a number of interference scenarios;
Fig. 3 illustrates interference coordination scenario;
Fig. 4 illustrates a critical interference scenario;
Fig. 5 illustrates a beneficial resource assignment in an interference scenario;
Fig. 6 shows simulation results;
Fig. 7 shows simulation results;
Fig. 8 illustrates a signalling within an embodiment in a cellular network;
Fig. 9 illustrates another signalling scheme in one embodiment;
Fig. 10 illustrates another signalling scenario of one embodiment;
Fig. 11 illustrates yet another signalling scenario; and
Fig. 12 illustrates simulation results.

In the following the terms base-station and base station transceiver as well as mobile, mobile terminal, transceiver station, user equipment are used synonymously. Moreover, the term base-station transceiver 100 or other base-station transceiver 100 refers to a macro-cell or MBS and the term base-station transceiver 200 or second base-station transceiver 200 refers to a femto-cell or FBS.

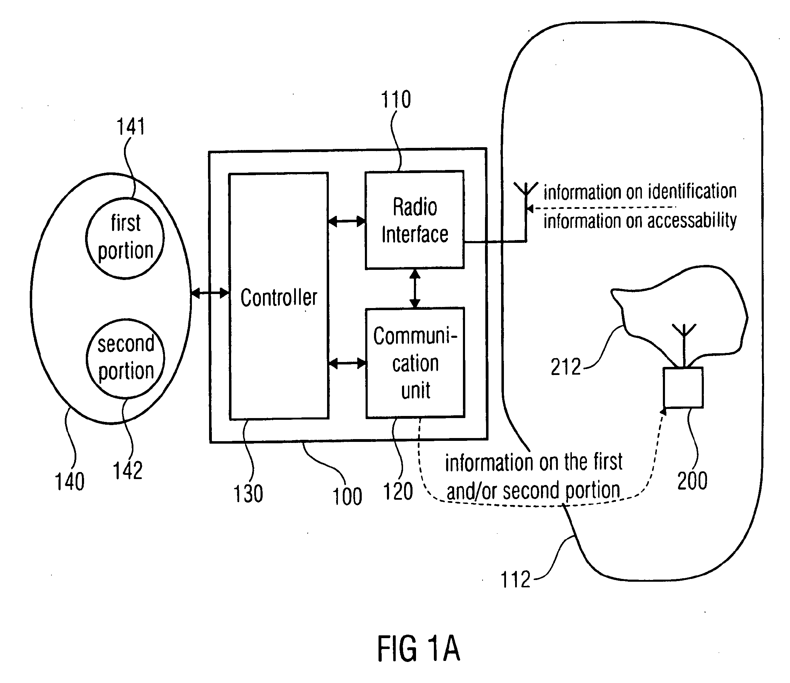

Fig. 1a illustrates an embodiment of a base-station transceiver 100 being operative in a mobile communication system. The mobile communication system may refer to any mobile communication system as, for example, GSM (GSM = Global System for Mobile Communications), 3rd generation systems as specified by 3GPP (3GPP = Third Generation Partnership Project), UMTS (UMTS = Universal Mobile Communication System), CDMA (CDMA = Code Division Multiple Access), WCDMA, (WCDMA = Wideband CDMA), LTE, LTE-A, etc.

The base-station transceiver 100 of Fig. 1a comprises a radio interface 110 adapted for having a first coverage area 112 surrounding a second coverage area 212 of a second base-station transceiver 200. In other words, a hierarchical cell structure may be established and the embodiment may be adapted for establishing an umbrella cell, i.e., a macro-cell that overlays at least one femto-cell according to coverage areas 112 and 212.

The embodiment of the base-station transceiver 100 further comprises communication unit 120 being adapted for communicating within the mobile communication system using the radio interface 110 and a first portion 141 of the radio resources from a pool 140 of radio resources of the mobile communication system, the communication unit 120 being further adapted for receiving an information on an identification and an information on an accessibility of the second base-station transceiver 200.

In other words, the communication unit 120 communicates using the radio interface 110 within the mobile communication system. As radio resources, all kinds of radio resources may be utilized in embodiments, i.e., one of the group of e.g. a transmission power, a carrier, a subcarrier, a frequency, a code, timeslot, a spatial subchannel, a transmit or receive antenna, a spreading or channelization code, a scrambling code, an interleaving sequence etc., may be utilized by the base-station transceiver 100 for communicating through the radio interface 110 in the mobile communication system.

In general, all such radio resources are summarized in the pool 140 of radio resources, where all radio resources used by the mobile communication system may be gathered. In order to prevent critical interference conditions in the mobile communication system, the radio resources from the pool 140 of radio resources may be coordinated.

In other words, the communication unit 120 is adapted for receiving information on an identification that may identify another network node, for example, a FBS and/or an FUE as the second base-station transceiver 200. The information may be directly received from the device identified, in embodiments, however, other devices as for example mobile devices may be configured for carrying out measurements within the mobile communication system, which in turn are, for example, reported to the present base-station transceiver 100.

According to Fig. 1a the base-station transceiver 100 further comprises a controller 130, which is adapted for the controlling of the first portion 141 of radio resources and for determining a second portion 142 of radio resources based on the pool 140 of radio resources, the information on the identification and the information on the accessibility. The second portion 142 of radio resources is such that a mutual interference between the second base-station transceiver 200 using the second portion 142 of radio resources and the base-station transceiver 100 using the first portion 141 of the radio resources is reduced. The communication unit 120 is further adapted for communicating an information on the first portion 141 and/or the second portion 142 of radio resources to the second base-station transceiver 200.

In embodiments multiple scenarios are conceivable. In embodiments there may be open-access femto-cells or second base-station transceivers 200, to which mobile stations are allowed to establish and to hand-over to. Other femto-cells or second base-station transceivers 200 may be closed-access femto-cells as e.g. in home environments, i.e. only selected mobile stations may be able to establish with a closed-access femto-cell. In embodiments both kinds of femto-cells or second base-station transceivers 200 may be interference or resource coordinated by a base-station transceiver 100, i.e. an MBS or macro-cell. In embodiments interference coordination with closed-access femto-cells may be more critical as a MUE being close to a FBS is not able to hand-over to the FBS. Therewith, interference is more severe when the MUE uses the same radio resource as a FUE. If such a FBS was an open-access FBS, said MUE could hand-over to the FBS and interference at the FBS caused by a close-by MUE could be avoided. Therefore focus of embodiments may be on closed-access FBS, however, embodiments are not limited thereto.

In embodiments the information on the accessibility may be provided implicitly with the information on the identification, in other words, once an information on an identification of a femto-cell or second base-station transceiver 200 is available at the base-station transceiver 100, the information on accessibility could be derived from a list of femto-cells or second base-station transceivers 200. In some embodiments second base-station transceivers 200 may have a certain form of identification, which may be unique, however, identifies the FBS or second base-station transceiver 200 as an open-access or closed-access FBS. In other embodiments the MBS may receive measurement reports for example from MUEs, which are configured thereto and receive reference signals from a FBS. The MUE may try to access the FBS or establish and report if such attempt has failed, i.e. the information on accessibility may be, in some embodiments, a report on a failed access attempt of a MUE.

In other words, the controller 130 is adapted for coordinating interference by determining a first portion 141 and a second portion 142 of radio resources. The first portion 141 and the second portion 142 may be such that an interference is reduced when the base-station transceiver 100, using the first portion 141 of radio resources, communicates simultaneously with the second base-station transceiver 200, using the second portion 142 of radio resources. Such communication may be in the uplink and/or in the downlink. The first portion 141 of radio resources and the second portion 142 of radio resources may be such that they are orthogonal, i.e., that no interference or collisions may be created. In other embodiments they may, to an extent, overlap or collide, however, in a way which is controlled such that a system capacity of the entire system is still optimized. In other words, reducing the interference may lead to the minimizing of simultaneous usage of radio resources, or coordinating collisions of radio resources in a way that a system capacity is optimized.

In other words in some embodiments, the base-station transceiver 100 may be adapted for using the pool 140 of resources entirely, i.e. the first portion 141 of resources may extend to the complete pool 140 of radio resources. In an embodiment, e.g. in an OFDM-system (OFDM = Orthogonal Frequency Division Multiplexing) the base-station transceiver 100 may operate all subcarriers of the system, comprised by the pool 140 and the first portion 141 of radio resources, when the second base-station transceiver 200 is detected, based on the information on the identity of the second base-station transceiver 200 and the information on accessibility of the second base-station transceiver 200.

The base-station transceiver 100 may utilize all subcarriers for communicating in the mobile communication system, however it may not use its entire transmission power and it may not use the maximum data rate and/or the most complex modulation alphabet on each subcarrier. The controller 130 may then determine the second portion 142 of radio resources in terms of a number of subcarriers, the number of subcarriers may be a subset of all subcarriers and communicate an information on the second portion 142, i.e. on the subset of subcarriers to the second base-station transceiver 200. The controller 130 may also control the first portion 141 so to use subcarriers not being comprised in the subset, i.e. other subcarriers than those which were communicated to the second base-station transceiver 200.

However, in order to maintain the same data rate the base-station transceiver 100 may utilize higher data rates, i.e. higher transmission power and a more complex modulation alphabet, for the other subcarriers, i.e. in terms of the first portion 141 of radio resources. The above scenario shall serve as an example of an embodiment, in other embodiments the first portion 141 and the second portion 142 may overlap, i.e. subcarriers may be used by the base-station transceiver 100 and the second base-station transceiver 200, however, collisions being coordinated by the controller 130. In other embodiments other radio resources may be used as mentioned above, e.g. time slots, codes, frequencies etc.

According to Fig. 1a, the communication unit 120 communicates an information on the first portion 141 and/or the second portion 142 to the second base-station transceiver 200. In embodiments, the base-station transceiver 100 may comprise a network interface for communicating with the second base-station transceiver 200, and the communication unit 120 may be adapted for communicating the information on the first portion 141 and/or the second portion 142 of radio resources to the second base-station transceiver 200 through the network interface, based on the information on the identification.

Such communication may be carried out on a frequent time basis, i.e., the controller 130 may be adapted for controlling the first portion 141 and the second portion 142 of radio resources in a repetitive or continuous manner, so to adapt said portions to an interference condition in the network. In other words, interference coordination or control may be carried out adaptively, e.g. based on instantaneous interference or load conditions in the network.

Moreover, an MBS in terms of a base-station transceiver 100 can be adapted for determining the resource utilization in the macro-cell served by said MBS. There may be an FBS within the coverage area 112 of said MBS, for example in terms of the second base-station transceiver 200. In one embodiment, a mobile terminal may receive reference signals from the second base-station transceiver 200, the mobile terminal being configured for taking reference signal measurements. The UE may report measurements on a reference signal from the second base-station transceiver 200 to the base-station transceiver 100, i.e., the MBS may be determining the FBS based on MUE or FUE measurements. The MBS may then coordinate the resources of the FBS within its coverage area by explicit signalling, which may be carried out through a network interface. Such a network interface may in an embodiment be a radio interface, for example a similar radio interface. In other embodiments, however, it may be a wired interface, i.e., a signalling may be carried out through the backbone or backhaul or wired network part of the mobile communication system into another communication system, to which the FBS is attached. Such signalling may be carried out in terms of IP (IP = Internet Protocol) and/or TCP (TCP = Transmission Control Protocol) data packets.

In some embodiments the base-station transceiver 100 may determine an address of the second base-station transceiver 200 for carrying out said communication of the information on the second portion 142 of radio resources. Said address may, in some embodiments, be derived from the information on the identification. In some embodiments the second base-station transceiver 200 may register, e.g. once it is plugged in, with a central network node, e.g. a server or provider e.g. in the internet. The base-station transceiver 100 may then determine e.g. an IP-address from the central node on the basis of the information on the identity. In other embodiments the second base station transceiver 200 may be adapted for overhearing or receiving downlink signals from the base-station transceiver 100, e.g. in terms of reference signals or broadcast signals comprising system information. The second base-station transceiver 200 may then detect the mobile communication system the base-station transceiver 100 belongs to and register itself with the mobile communication system, e.g. through the internet. The base-station transceiver 100 may then communicate the information on the second portion 142 through the backbone of the mobile communication system, to which the second base-station transceiver 200 made itself known to.

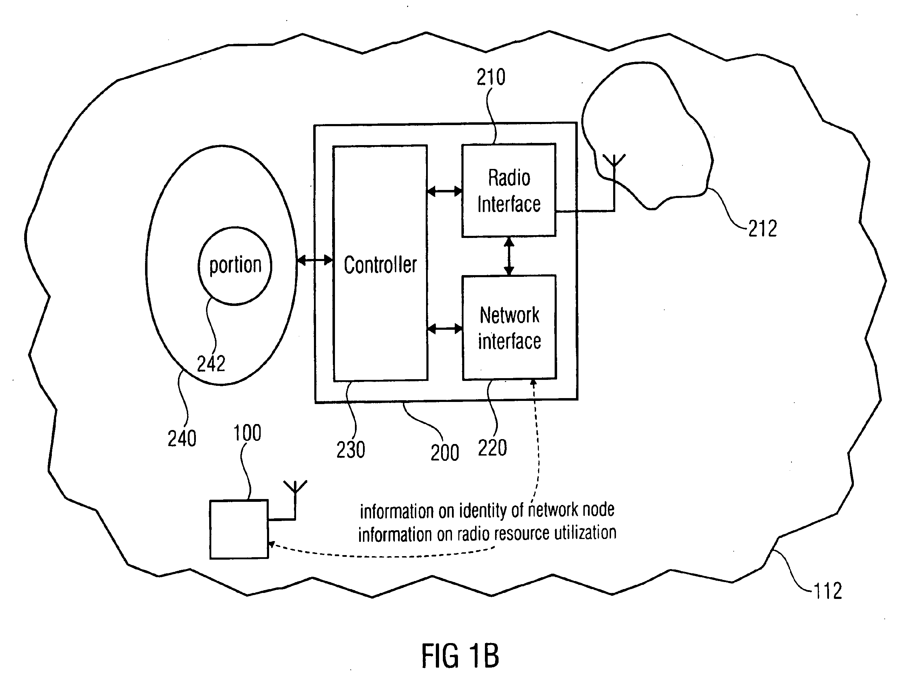

Fig. 1b shows another embodiment of a base-station transceiver 200 being operative in a mobile communication system. The embodiment of the base-station transceiver 200 depicted in Fig. 1b may correspond to a FBS. The base-station transceiver 200 depicted in Fig. 1b comprises a radio interface 210 being adapted for having a first coverage area 212 being surrounded by a second coverage area 112 of the other base-station transceiver 100. According to the above description, the base-station transceiver 200 may correspond to the second base-station transceiver 200 in the embodiments explained with the assistance of Fig. 1a.

In other words, the base-station transceiver 100 of Fig. 1a may correspond to the other base-station transceiver 100 of Fig. 1b. The base-station transceiver 200 depicted in Fig. 1b comprises a radio interface 210 which may be further adapted for communicating within the mobile communication system using a portion 242 of radio resources from a pool 240 of radio resources of the mobile communication system. In embodiments, the pool 240 may correspond to the pool 140, i.e., MBS and FBS may operate on the same radio resources. In other embodiments, the pool 240 for FBS and FUE may comprise less radio resources as the pool 140 for MBS and MUE. In other words femto resources may be restricted in advance in some embodiments.

The base-station transceiver 200 further comprises a network interface 220 being adapted for receiving an information on an identity of a network node and an information on a radio resource utilization. The network interface 220 may be adapted for receiving the information through the radio interface 210, e.g. in terms of downlink signals from the other transceiver 100, and/or through a backbone or backhaul or wired network it is connected to. Moreover, the base-station transceiver 200 comprises a controller 230, being adapted for controlling the portion 242 of radio resources based on the information on the identity of the network node, the information on the radio resource utilization and the pool 240 of radio resources.

In line with the above explanations and embodiments, the base-station transceiver 200 can be adapted for receiving such information for example from the MBS and the controller 230 may be adapted for controlling the portion 242 on the basis of such information.

In embodiments of the base-station transceiver 200 the controller 230 may be adapted for controlling the portion 242, such that if the information of the identity is associated with the base-station transceiver 200 itself, further comprising an indication that it originated at the other base-station transceiver 100, the portion 242 may be controlled such that mutual interference between the other base-station transceiver 100, using radio resources according to the radio resource utilization and the base station transceiver 200 utilizing the portion 242 of radio resources, is reduced. In other words, the other base-station transceiver 100 may create a message to the base-station transceiver 200, informing the base-station transceiver 200 on a resource utilization. In embodiments this can be carried out by informing the base-station transceiver 200 on the resources used by the other base-station transceiver 100 so to coordinate the base-station transceiver 200 to use other resources.

In another embodiment, the other base-station transceiver 100, i.e. the MBS, may instruct the base-station transceiver 200, i.e. the FBS, explicitly to use resources indicated in such a message. According to the above embodiments, such a message may be received through a wired interface or a network interface. In other embodiments it may be received through the radio interface.

In embodiments the base-station transceiver 200 may receive multiple messages comprising information on a radio resource utilization of multiple other network nodes, as e.g. multiple MBS and/or FBS. In some embodiments the base-station transceiver 200 can be adapted to prioritize information provided by an MBS to information provided by an FBS. In other words, in embodiments inter-FBS interference coordination may be dominated by macro-to-femto-cell interference coordination. In other scenarios information from multiple MBS, as for example one information from a MBS in which's coverage area the respective base-station transceiver 200 or FBS is located and one from another MBS, may be received and taken into account. In other words, information from multiple MBS may be considered as e.g. information from a MBS in which the FBS is located, and information from one or more neighboring MBS. Embodiments therewith provide the advantage that especially in cell edge areas, where interference coordination can be particularly critical, information from multiple neighboring MBSs may be taken into account by FBSs, base-station transceivers 200 respectively.

In the following, a more detailed embodiment will be described for which focus is on the uplink femto-macro interference as it is a scenario which is especially prioritized by standardization bodies, cf. (3GPP TR 25.820, "3G Home NodeB Study Item Technical Report", May 2008). The following embodiments will focus on the example of LTE signalling, however, are equally applicable to a conventional mobile communication system.

The following embodiment allows for uplink interference coordination between femto and macro-cells. The embodiment utilizes existing LTE signalling and provides the further advantage that no significant changes in existing 3GPP standards.

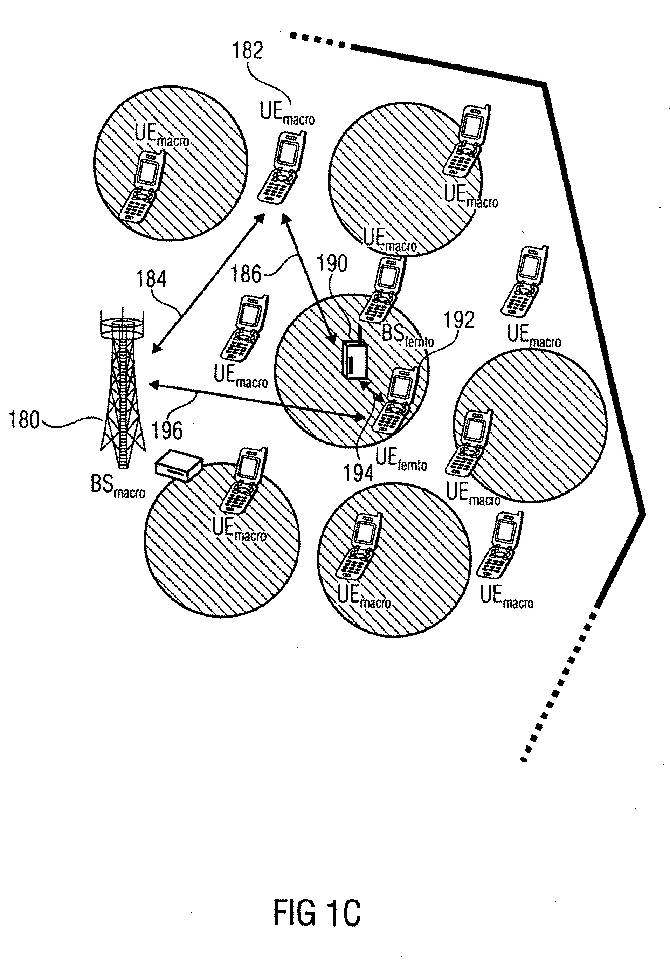

As already mentioned above, femto-cells are mini plug-and-play home base-stations that share the resources with macro-cells. They are intended to enhance the coverage of for example LTE and LTE-A in the home environment. Fig. 1c illustrates a network scenario with a macro-cell and multiple femto-cells. Fig. 1c shows an MBS 180 which could for example operate in an embodiment of the base-station transceiver 100. Moreover, Fig. 1c shows an FBS or femto-cell 190. The macro-cell 180 has a MUE 182 attached, i.e., communication signals are exchanged between the base-station transceiver 180 and the UE 182 indicated by the double-sided arrow 184.

The FBS 190 which can for example correspond to an embodiment of the base-station transceiver 200, has attached to it a femto-UE 192. The FBS 190 communicates with the femto-UE 192 which is indicated by the double-sided arrow 194. Moreover, the scenario depicted in Fig. 1c shows a number of other macro UEs and a number of other femto-cells, which are for exemplary purposes. If the macro-UE 182 and the femto-UE 192 use the same radio resources for communicating with their respective base-stations, interference is created. This is indicated by the interference arrows 186 and 196 in Fig. 1c. In other words, if the macro-UE 182 and the femto-UE 192 use the same radio resources for transmitting signals to their respective base-stations, uplink interference is created. If the MBS 180 and the FBS 190 use the same radio resources for transmitting signals to their respective macro-UE 182 and femto-UE 192, downlink interference is created. Therefore, the interference arrows 186 and 196 are double-sided. Fig. 1c illustrates the useful signal and interference situation in a femto-cell deployed within a macro-cell.

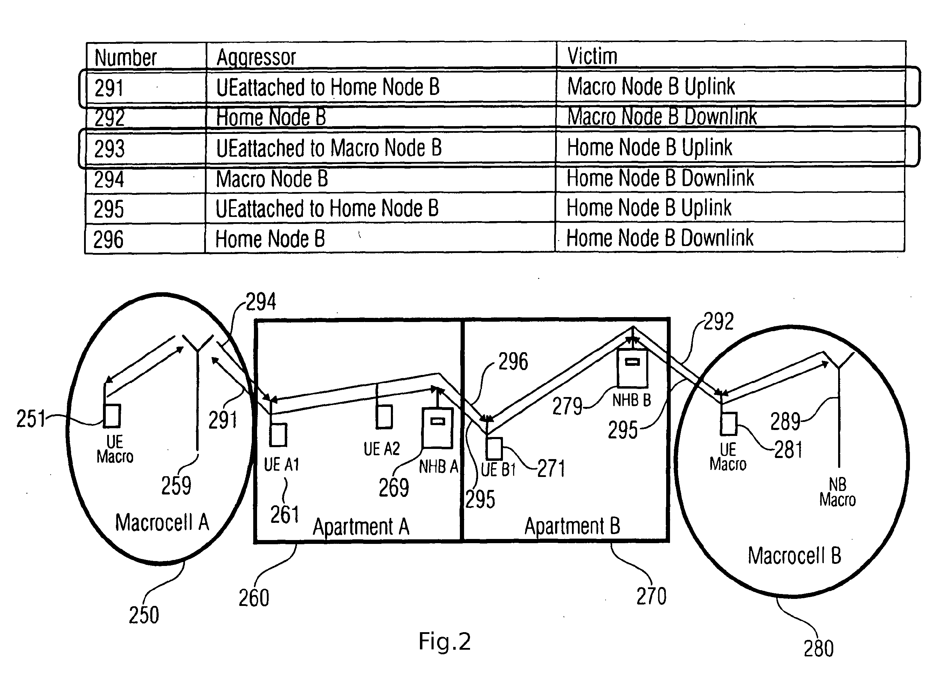

In 3GPP TR 25.820, "3G Home NodeB Study Item Technical Report", May 2008, 3GPP has prioritized interference scenarios related to femto-cell deployments. These scenarios are listed and illustrated in Fig. 2. Fig. 2 shows a table at the top and a network illustration at the bottom. The network illustration at the bottom of Fig. 2 shows a macro-cell 250, a femto-cell 260 which corresponds for example to an apartment A, another femto-cell 270 which corresponds, for example, to another apartment B, and another macro-cell 280. Within the macro-cell 250 there is a macro-UE 251 which is communicating with the corresponding MBS 259. Next to the macro-cell 250, there is the femto-cell 260 in which there is a femto-UE 261 communicating with the corresponding FBS 269. When the femto-UE 261 transmits signals to the FBS 269, interference for the macro-UE 251 is created at the base-station transceiver 259 which is indicated by the arrow 291, and to which the first row of the table at the top of Fig. 2 corresponds. In this scenario, the UE attached to the Home NodeB or the FBS 269 acts as aggressor, as creating interference to the victim, which corresponds in this scenario to the macro-nodeB in the uplink, i.e., to the MBS 259.

In the femto-cell 270, there is a femto-UE 271 communicating to a FBS 279. Next, there is the macro-cell 280 in which a macro-UE 281 communicates with the MBS 289. As the FBS 271 communicates with the femto-UE 271, it creates interference in the downlink for the macro-UE 281, which is indicated by the arrow 292 to which the second row of the table at the top of Fig. 2 corresponds. In this scenario, the Home NodeB, i.e., the femto-base-station 279 is the aggressor creating an interference for the victim, in this case the MBS 289.

The macro-UE 281, in turn, when transmitting to its MBS 289, creates interference at the FBS 279. The third row of the table corresponds to the scenario, in which the macro-UE 281 attached to the macro-nodeB or base-station transceiver 289 is the aggressor creating interference to the Home NodeB or FBS 279. The arrow 293 shows the interference that macro-UE 281 attached to the macro-nodeB 289 creates at the Home NodeB 279. The arrow 294 indicates interference which is created by a MBS 259 to a femto-UE 269 in the downlink. According to the fifth row of the table at the top of Fig. 2, arrow 295 indicates the interference which is created by a femto-UE 271 to a FBS 269 in the uplink. In the last row of the table, the arrow 296 indicates interference which is created by a Home NodeB or FBS 279 to another FBS 269 in the downlink.

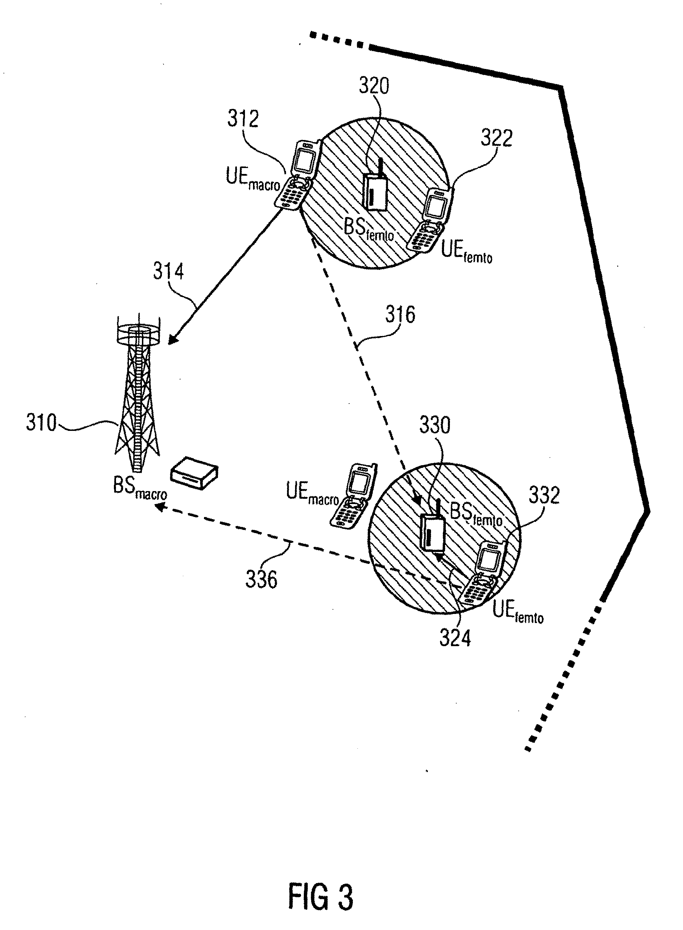

According to the table shown in Fig. 2, 3GPP has prioritized two interference scenarios which are given by the arrows 291 and 293 in the corresponding rows in the table. The illustration of interference scenarios can also be found in the 3G Home NodeB Study Item in the technical report 3GPP TR 25.820, cf. "3G Home NodeB Study Item Technical Report", May 2008.

In the following embodiments mainly addressing interference scenarios, with priority numbers 291 and 293, i.e., of rows 1 and 3 of the table depicted in Fig. 2 are explained. In other words, in the following, an embodiment carrying out a method to reduce mutual uplink macro-femto interference will be discussed. The embodiments discussed provide the advantage that they have only minimal impact, or no impact, on existing LTE standards.

At first it will be clarified what is good or advantageous and what is bad or disadvantageous resource allocation for an uplink transmission. First a scenario is considered, in which a femto-UE in a femto-cell is far away from a macro-UE and in which both use the same resources.

Fig. 3 shows a MBS 310 which receives the signals of a macro-UE 312. The signals transmitted by the macro-UE 312 to the MBS 310 are indicated by the arrow 314. Moreover, Fig. 3 shows a FBS 320 creating a femto-cell to which a femto-UE 322 is attached. Furthermore, Fig. 3 shows another FBS 330 to which a femto-UE 332 is attached. In the scenario depicted in Fig. 3 it is assumed that the femto-UE 332 transmits a signal to the FBS 330 which is indicated by the arrow 334.

In the scenario depicted in Fig. 3, uplink transmission, i.e., transmission from a UE to a base-station is considered. In this specific scenario, the macro-UE 312 transmits to MBS 310 using the same radio resources which femto-UE 332 uses to transmit the signals to the FBS 330. Therewith, the macro-UE 312 creates an interference at the FBS 330 indicated by the arrow 316, the femto-UE 332 creates an interference at the MBS 310 indicated by the arrow 336 respectively. It can be seen from Fig. 3 that in this scenario, the uplink radio resources are chosen in a manner that resources being reused in a femto-cell are spatially separated from MUEs using similar resources. Spatial separation as understood here as a radio distance, where radio distance refers to a certain attenuation. Generally, attenuation grows with a larger distance of transmitters, i.e., due to the so-called free space propagation loss.

Therefore spatial separation evokes a higher attenuation and therewith corresponds to a large radio distance. In different scenarios, there may be indoor attenuation components, outdoor attenuation components and all sorts of reflections, refractions etc. in between. If two network devices are spatially separated, this corresponds to a large attenuation between the two, which in free space corresponds to a spatial distance. In the radio environment, this may also correspond to a large attenuation between the two radio devices, which may be evoked by e.g. walls or other obstacles on the radio paths.

Embodiments having a large spatial separation provide the advantage of a low interference from the macro-UE 312 at the FBS 330. Moreover, the femto-UE 332 then requires only low transmission power to achieve a high signal-to-interference-ratio (SIR = Signal-to-Interference-Ratio) at the FBS 330, which prolongs battery life and is green ICT (ICT = Information-Communication Technology). Moreover, low interference is created at the MBS 310 from the femto-UE 332 due to its low transmission power.

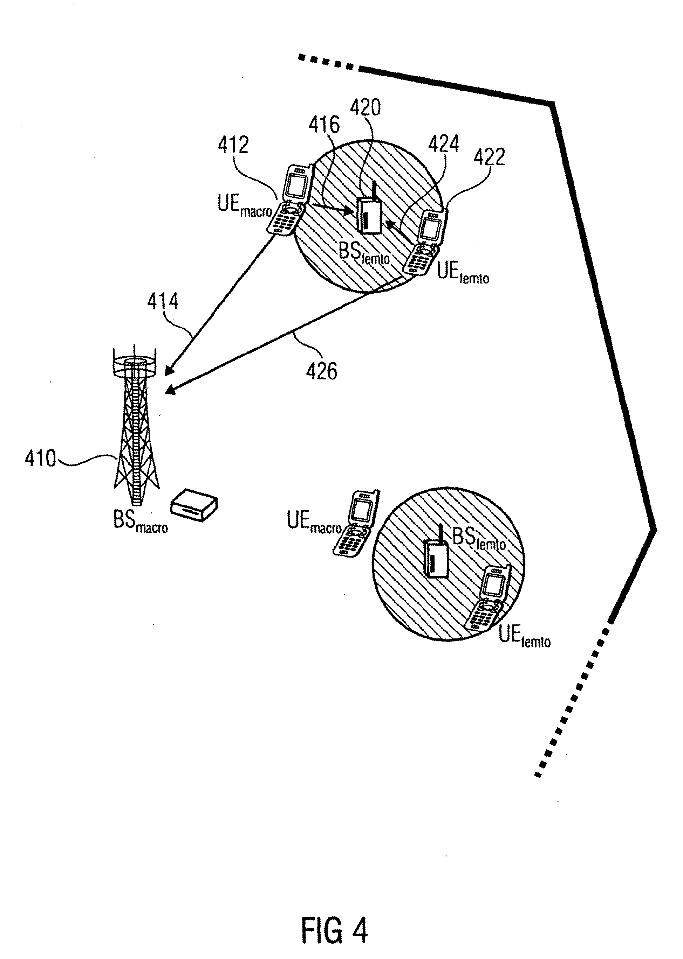

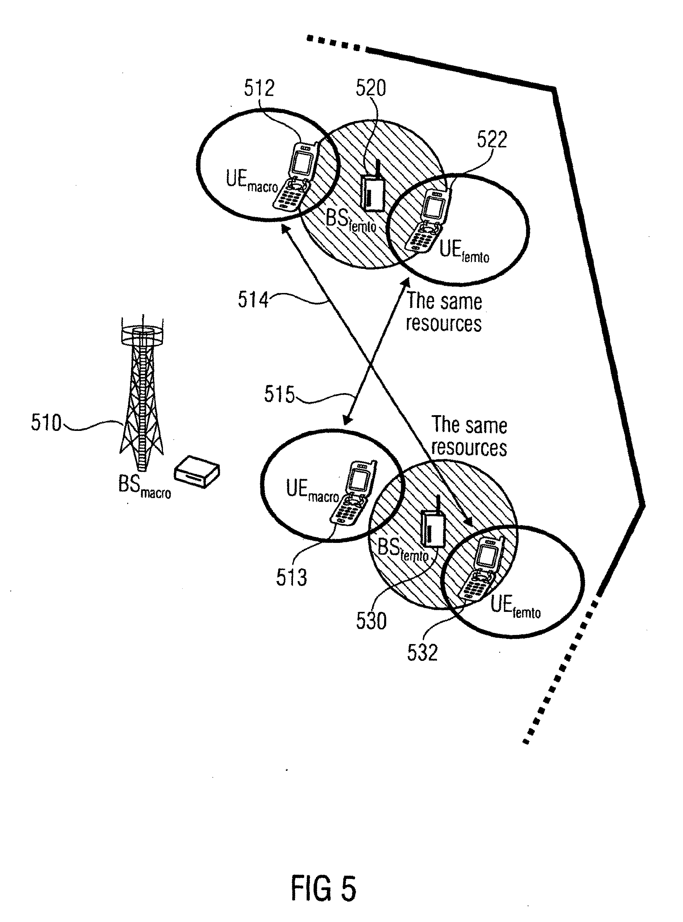

A second scenario which shall be considered is depicted in Fig. 4. Fig. 4 shows a MBS 410 communicating with a macro-UE 412. Again, uplink communication is considered, i.e., the macro-UE 412 transmits a signal to the MBS 410 which is indicated by the arrow 414. Moreover, in the scenario there is a FBS 420 communicating with the femto-UE 422. The femto-UE 422 transmits a signal to the FBS indicated by the arrow 424. As opposed to the scenario depicted in Fig. 3, macro-UE 412 using the same uplink resources as femto-UE 422 are not spatially separated, i.e., the attenuation between the macro-UE 412 and the FBS 420 is rather low. Therefore, the macro-UE 412 creates significant interference at the FBS 420 which is indicated by the arrow 416. In turn, the femto-UE 422 creates interference at the MBS 410 indicated by the arrow 426. In this scenario, the femto-cell-UE 222 is close to the macro-cell-UE 412 and therefore the attenuation in between is low. The drawbacks of the scenario are that high interference from the macro-UE 412 is created at the FBS 420. Therefore, the femto-UE 422 requires high transmission power to achieve reasonable SIR at the FBS 420, which shortens battery life and is not green ITC. Moreover, a high femto-UE 422 interference is created at the MBS 410 due to the high femto-UE 422 transmission power. To maintain its SIR, the macro-UE 412 may have to further increase its transmission power, etc. From the consideration of benefits and drawbacks, which have been explained with the assistance of Figs. 3 and 4, it follows that it is beneficial that FUEs reuse the resources of MUEs which are not close to their FBSs. This is once again illustrated in Fig. 5.

Fig. 5 shows a scenario with a MBS 510 communicating with a first macro-UE 512 and a second macro-UE 513. For better illustration purposes, the communication arrows are not depicted in Fig. 5. Moreover, within the macro-cell of MBS 510, there is a first FBS 520 communicating with a femto-UE 522 and a second FBS 530 communicating with a second femto-UE 532. The macro-UE 512 is spatially separated from the second femto-UE 532 and correspondingly uses the same resources, which is indicated by the arrow 514. Similarly, the macro-UE 513 is spatially separated from the femto-UE 522 and correspondingly also uses the same resources, indicated by the arrow 515. To summarize, Fig. 5 depicts an embodiment of beneficial resource assignment as the same resources are assigned to spatially separated entities. Again, it is to be noted that in this context spatially separated means that the attenuation between such entities is high, in other words, the attenuation for example between the macro-UE 512 and the FBS 530, which is where the interference in the uplink is created, is high. Correspondingly, the attenuation between the macro-UE 513 and the FBS 520 is high.

The benefits of such spatial separation or radio distance shall be explained by numerical results.

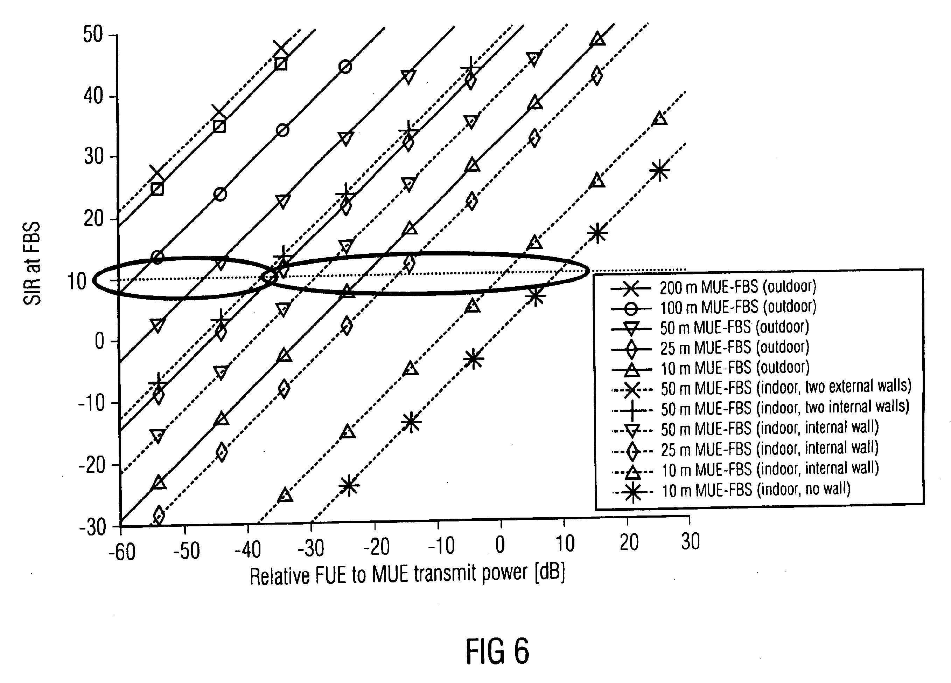

Fig. 6 illustrates simulation results that show the benefits of spatial separation as described above. Fig. 6 illustrates SIR at a FBS versus relative femto-UE to macro-UE transmit power. The results depicted in Fig. 6 are determined for multiple scenarios, which are given in the legend of Fig. 6, i.e. for indoor and outdoor scenarios for different spatial separations. The parameters varied are the spatial separation which translates to a higher attenuation, as explained above. Moreover, indoor and outdoor scenarios are considered, where the indoor attenuation is higher than the outdoor attenuation. On top, internal and external walls (buildings) are considered, which also model the respective attenuation. In other words, instead of a physical spatial separation, a wall in between two network entities may increase the attenuation and may correspond to a certain radio distance, which could equivalently by achieved by a spatial separation.

As shown in Fig. 6, SIR at the FBS mainly depends on three factors which are, first the relative femto-UE to macro-UE transmit power, second the distance between the macro-UE and the FBS, and third whether it is an indoor or an outdoor situation. To achieve the required SIR, one of two strategies could be pursued. First, the femto-UE could emit with high power and second, the spatial separation of a macro-UE and a femto-UE using the same resources could be utilized.

The first solution in which the femto-UE emits with high power has two drawbacks. Firstly, an increase in the overall transmission power can be observed, which translates to a low battery life and non-green ITC. Moreover, the SIR of the MBS is decreased. The second embodiment, in which spatial separation of the macro-UE and FUEs using the same resources is carried out saves transmission power, i.e., is therefore green ITC, but requires coordination between the femto-UE and the macro-UE, so that FUEs and MUEs close to each other use different resources. Embodiments therefore carry out the coordination and may, for example, utilize existing LTE signals, which has minimal impact on the system if any impact at all.

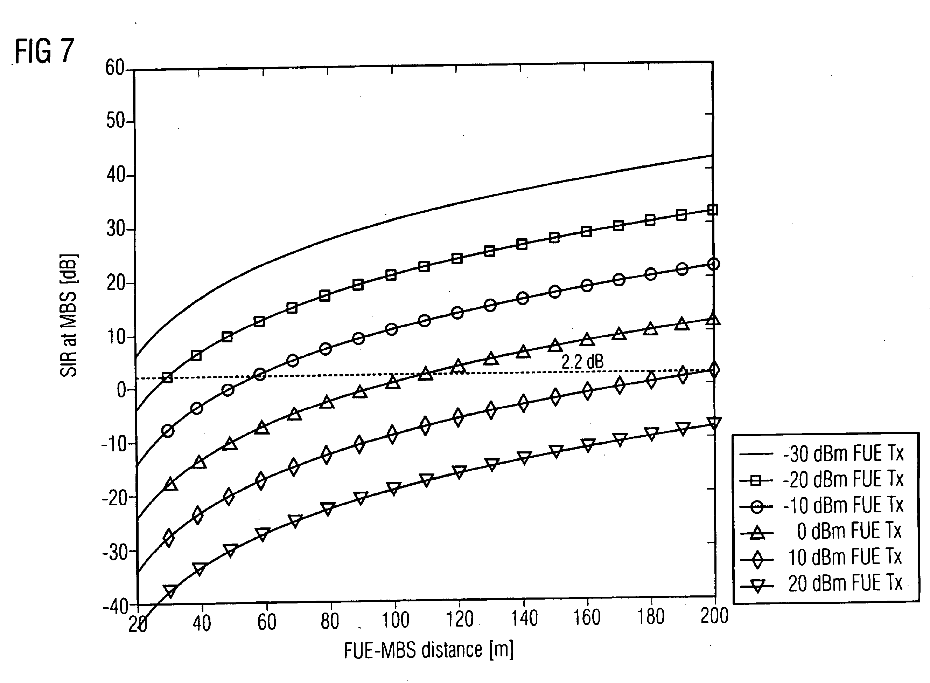

Fig. 7 shows simulation results for the SIR at the MBS versus the relative femto-UE to macro-UE base-station distance. Again, simulations have been carried out for different parameters, wherein in Fig. 7 the transmission power of the femto-UE was varied according to the legend. The SIR at the MBS due to sixteen active FUEs assuming indoor MUEs of arbitrary precision in the cell is shown in Fig. 7. Moreover, it is assumed that a received power at the MBS equals that of a cell-edge MUE transmitting with full power. It can be noted that if FUEs transmit with - 30dBm then the SIR at the MBS is always sufficient. This is indicated in Fig. 7 by the straight line which is always above the dotted line, indicating the minimum required SIR. However, -30dBm is always sufficient for femto-cell transmission only if the MUE and the FUE are separated enough, i.e., more than 50m, as can be seen from Fig. 6, marked by the right hand circled area. It can also be noted that for FUE transmission powers higher than 10dB, the minimum SIR is never achieved. For example, if a MUE at 40m from the MBS transmits with 0dBm, then nearby FUEs need more than -10dBm, cf. Fig. 6, to achieve good SIR at its FBS. However, this is not feasible due to low SIR at the MBS in this case.

Embodiments may coordinate resource usage of FUEs and MUEs, exploiting the existing LTE signalling procedures used for inter-cell interference coordination (ICIC = Inter-Cell Interference Coordination). Embodiments may develop interference coordination schemes which benefit from the existing ICIC signalling and thus keep the impact on existing standards low.

Embodiments may for example use the existing uplink ICIC messages of LTE. One of them is the uplink high interference indication (HII = High Interference Indication) message which indicates per resource block, the occurrence of high interference sensitivity, as seen from the sending MBS, i.e., the e-NodeB. It is to be noted that a resource block may comprise all kinds of radio resources in this context. According to the above description, a resource block may correspond to any predetermined radio resource from a resource pool. In LTE, the target cell ID (ID = identification) received within the HII indicates the cell for which the corresponding HII is meant. In other words, a targeted base-station may be identified within such a message. The value of HII is valid until a new message carrying an update is received in the LTE standard. Another uplink ICIC message is for example the uplink interference overload indication which indicates the interference level experienced by a sending MBS on some resource blocks. This value may also be valid until reception of a new message carrying an update.

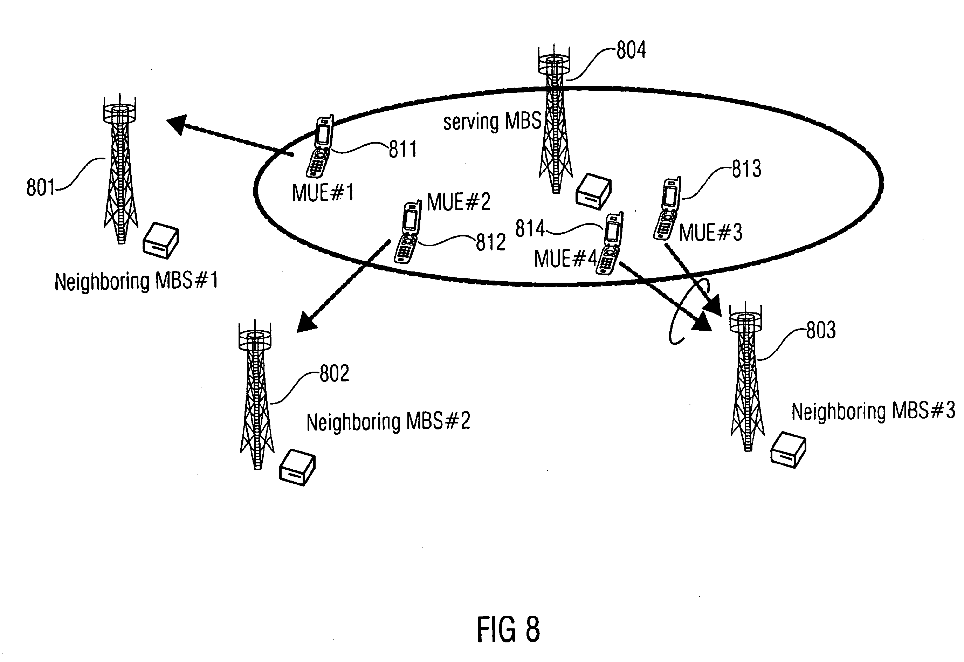

At present, in the standards, the HII message may only be sent to specific neighboring MBSs and may thus offer better possibilities for femto-cell interference coordination. An interference overload indication is a broadcast message. The principle of HII is illustrated in Fig. 8. Fig. 8 shows four MBSs 801, 802, 803 and 804. Furthermore, Fig. 8 illustrates a MUE 811 connected to MBS 801, a MUE 812 connected to MBS 802 and two MUEs 813 and 814 connected to the MBS 803. As two MUEs are connected to the MBS 803, interference coordination may be carried out in the uplink, i.e. the MBS 803 may send an HII to the neighboring MBSs 802 and 804. Therewith, the neighboring MBSs 802 and 804 may avoid reusing the radio resources indicated in the HII in their respective uplinks.

More details on the LTE ICIC signalling can for example be found in 3GPP TS 36.420, "X2 general aspects and principles", December 2007 and 3GPP TS 36.423, "X2 application protocol (X"AP)", June 2008.

At present in LTE, a serving MBS may exchange uplink ICIC messages only with a neighboring MBSs. For example, for HII it is required that a cell-edge MUEs are detected so that an HII is sent to appropriate MBSs. In embodiments, the HII signalling may be extended by tailoring the HII messages for each FBS. For example, a MUE may establish or determine if it is in close proximity to a femto-cell. This can, for example, be done by measuring RSRPs (RSRP = Reference Signal Received Power) by MUEs in the same way as it is done to establish if a MUE is in cell-edge area. In other words, a mobile communication system established by the MBSs and macro-cells may configure the MUEs to report certain reference signals measured with a certain reception power. Therewith, the mobile communications system is aware of MUEs which are getting closer to FBSs, i.e. approach a FBS coverage area. In other words, a base-station transceiver 100 may comprise a communication unit 120 which is adapted for receiving the information through the radio interface from a mobile terminal in the mobile communication system, e.g. in terms of a measurement report. Such a report may include the identification of FBS for which the reference signal was measured, as well as an indication on the strength of the measured signal.

The corresponding information on the identity which may be a FBS ID can be noted at the serving MBS. Moreover, a MUE could try to connect to the FBS. If the nearby MUE is not allowed to connect to the femto-cell in its proximity, as is for example happens in the case of a closed-access femto-cells, as they are frequently used in homes, then at a serving MBS a new HII message may be prepared in one embodiment for the corresponding FBS based on the new information, and also on the valid existing HII information for this FBS, in case such information exists. In other words, a MBS may collect the reports from the MUEs, therewith detecting a FBS by another report, which informs the MBS that a connection to the FBS could not be established by a MUE, identifying said FBS. Then, the MBS may create a message for the FBS, informing it on the second portion 142 of radio resources, which it is supposed to use. Based on the received HII or any other message, the FBS may decide which resources to schedule to its FUEs. In embodiments, if possible, the FBS will avoid assigning resources assigned to MUEs in its proximity.

In embodiments, the HII message as specified for LTE may be used. The HII message comprises a target cell-ID and a bit string within which each position in the bitmap represents a PRB (PRB = Physical Resource Block) where a physical resource block corresponds to a certain radio resource. Within the bit string for each PRB, a binary value is present, wherefore, value "1" indicates high interference sensitivity, and value "0" indicates low interference sensitivity, in embodiments this may be implemented vice versa.

Furthermore, in embodiments, since the HII messages are intended for specific FBSs, the messages may be directed directly to the corresponding FBS without broadcasting through the backhaul or backbone network, thus keeping the signalling effort at a reasonable level. In other words, the FBS, for example, corresponding to a base-station transceiver 200 may receive its own cell-ID, corresponding to the information on an identity of the network node, which in this embodiment may be its own identity. Based on the bitmap of PRBs, the radio resource utilization may be determined and thus the base-station transceiver 200 can coordinate its own resources, i.e. the portion of the resources.

In other embodiments, the base-station transceiver 100 may comprise a communication unit 120 which is adapted for receiving another information on an identification and another information on an accessibility of a third base-station, the third base-station having a coverage area being surrounded by the coverage area 112 of the radio phase 110. The controller 130 may then be adapted for controlling the first portion 141 and the second portion 142 of radio resources and for determining a third portion of radio resources based on the pool 140 of radio sources, the other information on the identification and the other information on the accessibility. In other words, the base-station transceiver 100 may be adapted for coordinating the radio resources used by multiple FBSs within its coverage area.

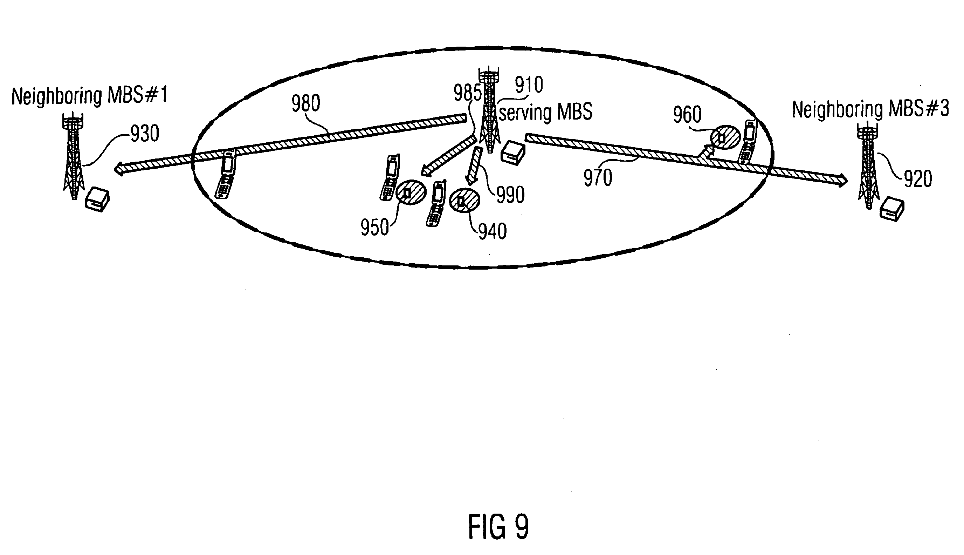

Fig. 9 shows a scenario, wherein a serving MBS 910 coordinates resource utilization for the uplink through HII messages. Fig. 9 shows three MBSs 910, 920 and 930. Moreover, Fig. 9 shows three FBSs 940, 950 and 960. In Fig. 9 the arrows 970, 980, 985 and 990 illustrate HII messages, which are sent out by the serving MBS 910 in order to coordinate the uplink interference. Since these HII messages are dedicated, different resources can be utilized for the femto-cells 940, 950 and 960, as well as for the neighboring MBSs 920 and 930.

In embodiments HII may be used for neighbor MBSs of a the serving MBS. Embodiments may also use HII for femto-cells located within the serving MBSs. A communication unit 120 may be adapted for exploiting a multiplicity of measurement reports as for example for the RSRP of multiple UEs and therewith coordinate a multiplicity of femto-cells within its coverage. A similar mechanism may also be used for coordinating the downlink resources, i.e. a base-station transceiver 100 may utilize the first portion 141 for transmitting information to a mobile terminal.

In other embodiments, a base-station transceiver 200, i.e. a FBS may exploit existing RSRP measurements of FUEs which may be configured in the same manner as MUEs. The RSRP measurements or reports may then be used in embodiments to determine whether said FUE is in a cell-edge area. In other words, in embodiments, the controller 230 may be adapted for determining a measure on a radio or spatial distance between the base-station transceiver 200 and the other base-station transceiver 100, and the controller 230 may be adapted for controlling the portion 242 based on the radio or spatial distance. As already mentioned above, the radio distance may be due to a spatial distance or any attenuation between the FBS and a MUE, or vice-versa. Therewith, a FBS or a base-station transceiver 200 may determine whether it is located near to a MBS or rather far away. In embodiments the base-station transceiver 200 may operate means for receiving signals from the other base-station transceiver 100, e.g. in terms of reference signals, on the basis of which the attenuation, the radio or spatial distance can be determined. The means for receiving may correspond to a radio interface.

In embodiments, the controller 230 may be adapted for determining whether it is located at a close range or at a far range based on the radio or spatial distance and for controlling the portion 242 of radio resources such that radio resources utilized by the other base-station transceiver 100 in the uplink and/or the downlink are avoided when the base-station transceiver 200 determined the far range. In other words, if the base-station transceiver 200 determines that it is far away from a MBS, it may use uplink resources, which are not critical for the uplink of the MBS. As the attenuation in the far range will be high between the MBS and an MUE, the FBS should try to avoid reusing resources used between the MBS and such MUE in embodiments.

In other words, based on the RSRP measurements, the femto-cells may in one embodiment determine whether they are in a cell-edge area or in a cell-interior area.

In embodiments it can be expected that FBSs, i.e. base-station transceiver 200, are only very rarely relocated, RSRP measurements to establish the position in the macro-cell may thus very rarely be exploited, for example only at the power on or on a very coarse time basis.

When a base-station transceiver 200 or a FBS receives an HIT, it may react similar to a neighbor MBS in an embodiment. Generally, it may try to avoid scheduling its FUEs, for example, in the frequency range indicated by HII, i.e. it may try to minimize femto-cell to macro-cell uplink interference in this sensitive frequency range. In this embodiment, it is prevented that FUEs that are the same cell area, e.g. in the cell-edge or cell interior area, as MUEs use the same resource, and by this concept, FUEs and MUEs are inherently separated spatially or in terms of radio distance or attenuation, which share the same resources. In embodiments, in order to prevent interference between femto-cells and neighboring macro-cells, femto-cells in cell-edge areas could also receive HII directed to the serving macro-cell assuming that they belong to the corresponding cell-edge area. In other words, the base station transceiver 200 may be adapted for overhearing or eavesdropping HII messages which are directed to neighboring MBSs. This may be carried out in the backbone network, e.g. by overhearing, eavesdropping or sniffing data packets, as e.g. TCP/IP data packets.

For cell interior FBSs, i.e. base-station transceivers that detected that they are close to the MBS, the HII message may be constructed for determining the resource blocks, which are not marked as high interference blocks in any of the HII messages meant for neighboring MBSs. That is, a base-station transceiver 200 may comprise a controller 230, which is adapted for controlling the portion 242 of radio resources such that radio resources utilized by the base-station transceiver 100 in the uplink and/or in the downlink are reused when the base-station transceiver 200 determined the close range. As the attenuation in the close range will be rather low between the MBS and an MUE, the FBS can reuse resources used between the MBS and such MUE in embodiments, as they are not as critical as resources used for the far range. However, as already mentioned, according to embodiments an FBS still tries to not reuse resource of a nearby MUE, in either uplink or downlink.

This can be done by overhearing messages actually directed to neighboring MBSs. In such embodiments the controller 230 can be adapted for controlling the portion 242 such that if the information on the identity is associated with a different base-station, the different base-station being different from the second base-station transceiver 100 as e.g. a neighbouring MBS, and further comprises an indication that it originated at the other base-station transceiver 100, the portion 242 is controlled such that mutual interference between the other base-station transceiver 100 using the radio resources according to the radio resource utilization and the base-station transceiver 200 utilizing the portion 242 of radio resources is reduced.

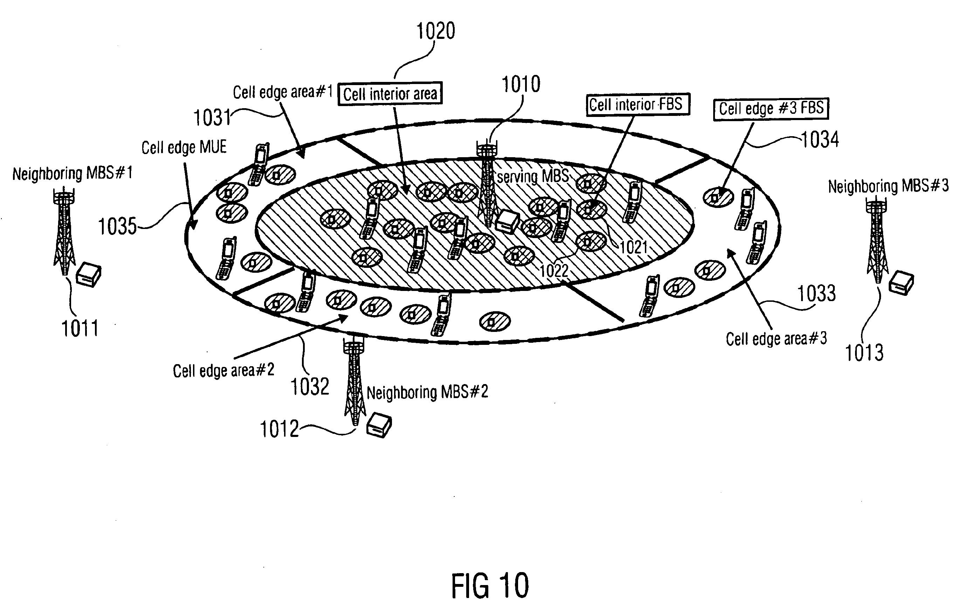

In embodiments, resources used for interior MUEs of the serving cell may be marked as HII resource blocks for cell interior FBSs. Fig. 10 illustrates such an embodiment. Fig. 10 shows four MBSs 1010, 1011, 1012, and 1013, of which the base-station transceiver 1010 shall be considered the serving base-station. Around the serving base-station transceiver 1010 there is the cell interior area 1020 having cell interior FBSs as for example 1021 and 1022. Moreover, the serving cell 1010 has three cell-edge areas 1031, 1032, and 1033, having for example a cell-edge FBS 1034, or a cell-edge MUE 1035. Fig. 10 illustrates how a macro cell can be subdivided in an interior cell part and cell-edge parts in one embodiment. In general, embodiments may subdivide a macro-cell in a multiplicity of cell areas, which may be located in a radial manner around a MBS.

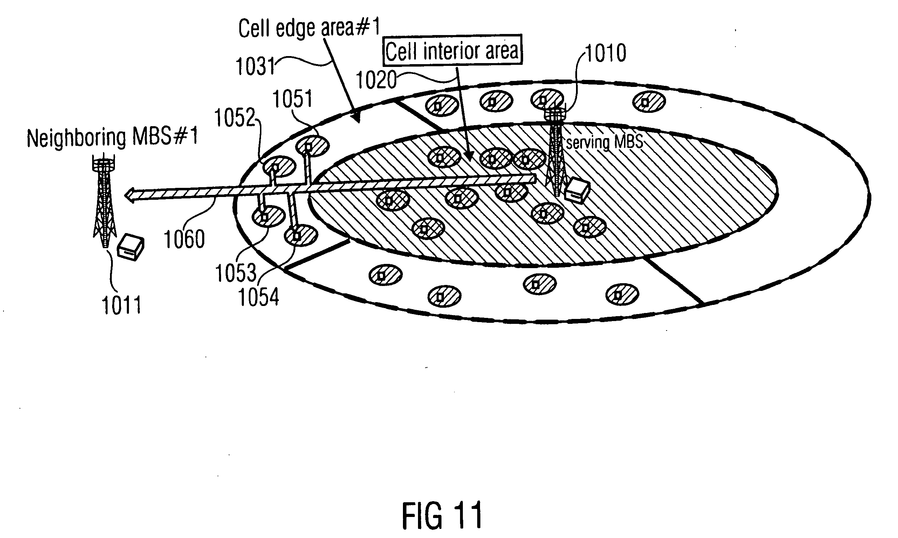

Fig. 11 illustrates how an HII message can be used to coordinate resources utilized by FBSs in the cell-edge part. Fig. 11 shows the serving base-station transceiver 1010 communicating an HII message to the neighbouring MBS 1011. Within the cell-edge area 1031, there are multiple FBSs 1051, 1052, 1053, and 1054. The arrow 1060 indicating the HII message dedicated for the neighbouring MBS 1011 indicates that the FBSs may overhear said message. As mentioned above in other embodiments the HII message may be provided in a dedicated and/or individual manner.

For example, an HII message is sent from the serving MBS 1010 to the neighbouring MBS 1011 and to the FBSs 1051, 1052, 1053 and 1054 in the cell-edge area 1031. Vice-versa, the same HII message from the neighbouring MBS 1011 may be sent to the serving MBS 1010 and to FBSs in the cell-edge area of the MBS 1011. The FBSs in the cell-edge area of the MBS 1011 may decide, based on the received HIIs, how to assign resources to their FUEs.

Together with HII, an uplink interference overload indication signalling may be utilized in embodiments for interference coordination with femto-cells. This message is also part of the LTE specifications and may also be sent to all femto-cells. Then, the femto-cells using the highly interfered resource blocks of MUEs may stop using them and chose the others in embodiments. Alternatively, femto-cells may reduce their transmission power in embodiments over these resource blocks.

In embodiments, the cell interior area could also be split in a cell center and a cell area between the cell center and cell-edge. Generally, a macro-cell may be subdivided into multiple different areas which could for example be determined by the RSRP measurements. The cell center area could be recognized by RSRP measurements of FUEs, for example detecting strong signals from the MBSs in which they are geographically situated. Therewith, in other embodiments, a more targeted resource assignment with the cell areas split as illustrated in Figs. 10 and 11 may also be carried out, principally using a multiplicity of different cell areas.

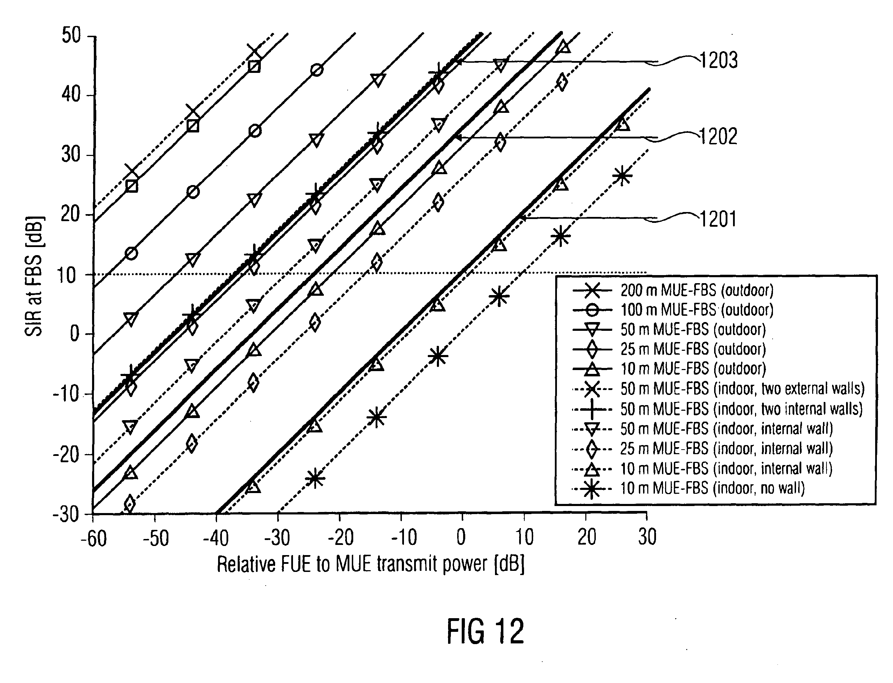

Fig. 12 shows simulation results of the embodiments in terms of a view graph illustrating SIR at the FBS versus relative FUE to MUE transmission power. Fig. 12 illustrates a similar view graph as Fig. 6. In Fig. 12 the improvements of the average SIR due to embodiments are illustrated. Embodiments may force spatial separation of the macro and the femto entities that use the same frequencies or radio resources, and therewith significantly improve the average SIR for a given relative FUE to MUE transmit power. Fig. 12 illustrates the average SIR at a FBS for the conventional method, i.e. if no resource coordination is carried out which is indicated by arrow 1201 in Fig. 12. Moreover, Fig. 12 shows, by the arrow 1202, the average SIR at a FBS for a conventional method when no coordination is carried out but the most critical femto-cells are switched off. Finally, arrow 1203 shows the average SIR at the FBS for an embodiment, where a coordination between femto and macro resources is carried out according to the above-described embodiments. The SIR improvements are significant.

The above embodiments were regarded mainly in the light of uplink transmission and therewith in the light of uplink interference coordination. Embodiments may also carry out downlink interference coordination. Embodiments may follow the similar line of reasoning as for uplink transmission. In downlink transmission it is also beneficial that a FBS reuses the resources of a MBS which are intended for MUEs far away from the specific FBS. Existing downlink ICIC messages in e.g. LTE indicate for each PRB if the transmission power is above a threshold value or not. This information may not be sufficient for femto-to-macro cell downlink interference coordination.

Therewith, embodiments may introduce a new message for the downlink interference coordination between femto and macro cells. Currently, in LTE serving MBSs exchange downlink ICIC messages only with neighboring MBSs. In embodiments, the MUE may establish or attach accordingly if they are in close proximity of a femto cell. This may for example in embodiments be done by carrying out measurements of RSRPs by MUEs in the same manner as done to establish if MUEs are in a cell-edge area. Correspondingly, the FBS identifications may be noted by the MBS. Furthermore, in embodiments, if the nearby MUE is not allowed to connect to the femto cell in its proximity, as it happens in the case of closed access femto cells, then at a serving MBS a new message may be prepared for the corresponding FBS. In embodiments, the new message may be based on new information and/or on still existing information for this FBS, if any such information exists.

Based on the received message, the base-station transceiver 200, i.e. the FBS may decide which resources to schedule for its downlink transmission for FUEs. If possible, it may avoid assigning resources which the corresponding MBS assigned for transmission to MUEs in the proximity of this FBS.

In embodiments, the downlink message may contain a target femto-cell ID and a string in which each position represents a PRB, for which a value of, for example, "1" indicates a high interference sensitivity and a value of, for example, "0" indicates a low interference sensitivity, and vice versa respectively.

Embodiments provide the advantage that a femto cell may share resources with macro cells more efficiently enhancing the coverage of LTE and/or LTE-A in the home environment. Embodiments may enable interference coordination in femto cell deployment and enable efficient interference mitigation techniques. Embodiments may reuse existing LTE / LTE-A intercell interference coordination methods and signalling to coordinate interference between femto and macro cells. Embodiments may therewith provide the advantage that they have only minimal impact on the existing LTE standard. By lowering the mutual interference and the overall transmission power, the system capacity may be significantly enhanced by the embodiments of the present invention.

Depending on certain implementation requirements of the inventive methods, the inventive methods can be implemented in hardware or in software. The implementation can be performed using a digital storage medium, in particular a disc, a DVD or a CD having electronically readable control signals stored thereon which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. A base-station transceiver (100) for being operative in a mobile communication system, comprising:
a radio interface (110) being adapted for having a first coverage area (112) surrounding a second coverage area (212) of a second base-station transceiver (200);
a communication unit (120) being adapted for communicating within the mobile communication system using the radio interface (110) and a first portion (141) of radio resources from a pool (140) of radio resources of the mobile communication system, the communication unit (120) further being adapted for receiving an information on an identification and an information on an accessibility of the second base-station transceiver (200);
a controller (130) being adapted for controlling the first portion (141) of radio resources and for determining a second portion (142) of radio resources based on the pool (140) of radio resources, the information on the identification and the information on the accessibility, the second portion (142) of radio resources being such that a mutual interference between the second base-station transceiver (200) using the second portion (142) of radio resources and the base-station transceiver (100) using the first portion (141) of radio resources is reduced,
wherein the communication unit (120) is further adapted to communicate an information on the first portion (141) and/or the second portion (142) of radio resources to the second base-station transceiver (200).

2. The base-station transceiver (100) of claim 1 further comprising a network interface for communicating with the second base-station transceiver (200) and wherein the communication unit (120) is adapted for communicating the information on the first portion (141) and/or the second portion (142) of radio resources to the second base-station transceiver (200) through the network interface based on the information on the identification.

3. The base-station transceiver (100) of one of the claims 1 or 2 wherein the controller (130) is adapted for controlling the first portion (141) and the second portion (142) of radio resources in a repetitive or continuous manner.

4. The base-station transceiver (100) of one of the claims 1 to 3, wherein the communication unit (120) is adapted for receiving the information through the radio interface (110) from a mobile terminal in the mobile communication system.

5. The base-station transceiver (100) of one of the claims 1 to 4, wherein the communication unit (120) is adapted for receiving another information on an identification and another information on an accessibility of a third base-station transceiver, the third base-station transceiver having a coverage area being surrounded by the coverage area (112) of the radio interface (110) and wherein the controller (130) is adapted for determining a third portion of radio resources based on the pool (140) of radio resources, the other information on the identification and the information on the accessibility, the third portion of radio resources being such that a mutual interference between the third base-station using the third portion of radio resources and the base-station transceiver (100) using the first portion (141) of radio resources is reduced, and wherein the communication unit (120) is further adapted for communicating an information on the third portion of radio resources to the third base-station transceiver.

6. The base-station transceiver (100) of one of the claims 1 to 5, wherein the communication unit (120) is adapted for utilizing the first portion for transmitting information to a mobile terminal.

7. Method for communicating in a mobile communication system, comprising the steps of:
operating a radio interface (110) having the first coverage area (112) and surrounding a second coverage area (212) of a second base-station transceiver (200);
communicating within a mobile communication system using a first portion (141) of radio resources from a pool (140) of radio resources of the mobile communication system;
receiving an information on an identification and an information on an accessibility of the second base-station transceiver (200);
controlling the first portion (141) of radio resources;
determining a second portion (142) of radio resources based on the pool (140) of radio resources, the information on the identification and the information on the accessibility, the second portion (142) of radio resources being such that the mutual interference between the second base-station transceiver (200) utilizing the second portion of radio resources and the base-station transceiver (100) using the first portion of radio resources is reduced; and
communicating an information on the second portion (142) of radio resources to the second base-station transceiver (200).

8. Computer program having a program code for performing the method of claim 7 when the computer program runs on a computer or processor.

9. A base-station transceiver (200) for being operative in a mobile communications system, comprising:
a radio interface (210) being adapted for having a first coverage area (212) being surrounded by a second coverage area (112) of another base-station transceiver (100), the radio interface (210) being further adapted for communicating with the mobile communication system using a portion (242) of radio resources from a pool (240) of radio resources of the mobile communications system;
a network interface (220) being adapted for receiving an information on an identity of a network node and an information on a radio resource utilization; and
a controller (230) being adapted for controlling the portion (242) of radio resources based on the information on the identity of the network node, the information on the radio resource utilization and the pool (240) of radio resources.

10. The base-station transceiver (200) of claim 9, wherein the controller (230) is adapted for controlling the portion (242) such that if the information on the identity is associated with the base-station transceiver (200) and further comprises an indication that it originated at the other base-station transceiver (100) the portion (242) is controlled such that mutual interference between the other base-station transceiver (100) using radio resources according to the radio resources utilization and the base-station transceiver (200) using the portion (242) of radio resources is reduced.

11. The base-station transceiver (200) of claim 9, wherein the controller (230) is adapted for controlling the portion (242) such that if the information on the identity is associated with a different base-station transceiver, the different base-station transceiver being different from the other base-station transceiver (100) and further comprises an indication that it originated at the other base-station transceiver (100), the portion (242) is controlled such that a mutual interference between the other base-station transceiver (100) using the radio resources according to the radio resource utilization and the base-station transceiver (200) utilizing the portion (242) of radio resources is reduced.

12. The base-station transceiver (200) of one of the claims 9 to 11, wherein the controller (230) is adapted for determining a measure on an attenuation, a spatial distance or a radio distance between the base-station transceiver (200) and the other base-station transceiver (100) and wherein the controller (230) is adapted for controlling the portion (242) based on the measure on an attenuation, a spatial distance or a radio distance.

13. The base-station transceiver (200) of claim 12, wherein the controller (230) is adapted for determining a close range and/or a far range between the base-station transceiver (200) and the other base-station transceiver (100) based on the measure and for controlling the portion (242) of radio resources, such that the radio resources utilized by the other base-station transceiver (100) in the uplink and/or the downlink are avoided by the base-station transceiver (200) when the far range is determined.

14. Base-station transceiver (200) of claim 13, wherein the controller (230) is adapted for controlling the portion (242) of radio resources such that the radio resources utilized by the base-station transceiver (100) in the uplink and/or the downlink are reused when the base-station transceiver (200) determined the close range.

15. Method for communicating in a mobile communication system, comprising the steps of:
operating a radio interface being adapted for having first coverage area (212) being surrounded by a second coverage area (112) of another base-station transceiver (100);
communicating with the mobile communications system using a portion (242) of the radio resources from a pool (240) of radio resources of the mobile communication system;
receiving an information on an identity of a network node and an information on a radio resource utilization; and
controlling the portion (242) of radio resources based on the information on the identity of the network node, the information on the radio resource utilization and the pool of radio resources.

16. Computer program having a program code for performing the method of claim 15 when the program code runs on a computer or processor.

## Patentansprüche

1. Ein Basisstation-Sende-Empfangs-Gerät (100) zum Wirksamsein in einem Mobilkommunikationssystem, mit folgenden Merkmalen:
einer Funkschnittstelle (110), die angepasst ist zum Aufweisen eines ersten Abdeckungsbereichs (112), der einen zweiten Abdeckungsbereich (212) eines zweiten Basisstation-Sende-Empfangs-Geräts (200) umgibt; und
einer Kommunikationseinheit (120), die zum Kommunizieren innerhalb des Mobilkommunikationssystems unter Verwendung der Funkschnittstelle (110) und eines ersten Teils (141) von Funkressourcen aus einem Pool (140) von Funkressourcen des Mobilkommunikationssystems angepasst ist, wobei die Kommunikationseinheit (120) ferner angepasst ist zum Empfangen einer Information über eine Identifikation und einer Information über eine Zugreifbarkeit des zweiten Basisstation-Sende-Empfangs-Geräts (200);
einer Steuerung (130), die angepasst ist zum Steuern des ersten Teils (141) von Funkressourcen und zum Bestimmen eines zweiten Teils (142) von Funkressourcen basierend auf dem Pool (140) von Funkressourcen, der Information über die Identifikation und der Information über die Zugreifbarkeit, wobei der zweite Teil (142) von Funkressourcen derart ist, dass eine gegenseitige Störung zwischen dem zweiten Basisstation-Sende-Empfangs-Gerät (200), das den zweiten Teil (142) von Funkressourcen verwendet, und dem Basisstation-Sende-Empfangs-Gerät (100), das den ersten Teil (141) von Funkressourcen verwendet, verringert ist,
wobei die Kommunikationseinheit (120) ferner angepasst ist, um eine Information über den ersten Teil (141) und/oder den zweiten Teil (142) von Funkressourcen an das zweite Basisstation-Sende-Empfangs-Gerät (200) zu übermitteln.

2. Das Basisstation-Sende-Empfangs-Gerät (100) gemäß Anspruch 1, das ferner eine Netzwerkschnittstelle zum Kommunizieren mit dem zweiten Basisstation-Sende-Empfangs-Gerät (200) aufweist, und wobei die Kommunikationseinheit (120) angepasst ist zum Übermitteln der Information über den ersten Teil (141) und/oder den zweiten Teil (142) von Funkressourcen an das zweite Basisstation-Sende-Empfangs-Gerät (200) durch die Netzwerkschnittstelle basierend auf der Information über die Identifikation.

3. Das Basisstation-Sende-Empfangs-Gerät (100) gemäß einem der Ansprüche 1 oder 2, bei dem die Steuerung (130) angepasst ist zum Steuern des ersten Teils (141) und des zweiten Teils (142) von Funkressourcen auf eine sich wiederholende oder kontinuierliche Weise.

4. Basisstation-Sende-Empfangs-Gerät (100) gemäß einem der Ansprüche 1 bis 3, bei dem die Kommunikationseinheit (120) angepasst ist zum Empfangen der Informationen durch die Funkschnittstelle (110) von einem mobilen Endgerät in dem Mobilkommunikationssystem.

5. Das Basisstation-Sende-Empfangs-Gerät (100) gemäß einem der Ansprüche 1 bis 4, bei dem die Kommunikationseinheit (120) angepasst ist zum Empfangen einer anderen Information über eine Identifikation und einer anderen Information über eine Zugreifbarkeit eines dritten Basisstation-Sende-Empfangs-Geräts, wobei das dritte Basisstation-Sende-Empfangs-Gerät einen Abdeckungsbereich aufweist, der durch den Abdeckungsbereich (112) der Funkschnittstelle (110) umgeben ist, und wobei die Steuerung (130) angepasst ist zum Bestimmen eines dritten Teils von Funkressourcen basierend auf dem Pool (140) von Funkressourcen, der anderen Information über die Identifikation und der Information über die Zugreifbarkeit, wobei der dritte Teil von Funkressourcen derart ist, dass eine gegenseitige Störung zwischen der dritten Basisstation, die den dritten Teil von Funkressourcen verwendet, und dem Basisstation-Sende-Empfangs-Gerät (100), das den ersten Teil (141) von Funkressourcen verwendet, verringert ist, und wobei die Kommunikationseinheit (120) ferner angepasst ist zum Übermitteln einer Information über den dritten Teil von Funkressourcen an das dritte Basisstation-Sende-Empfangs-Gerät.

6. Das Basisstation-Sende-Empfangs-Gerät (100) gemäß einem der Ansprüche 1 bis 5, bei dem die Kommunikationseinheit (120) angepasst ist zum Nutzen des ersten Teils zum Senden von Informationen an ein mobiles Endgerät.

7. Verfahren zum Kommunizieren in einem Mobilkonmunikationssystem, mit folgenden Schritten:
Betreiben einer Funkschnittstelle (110), die den ersten Abdeckungsbereich (112) aufweist und einen zweiten Abdeckungsbereich (212) eines zweiten Basisstation-Sende-Empfangs-Geräts (200) umgibt;
Kommunizieren innerhalb eines Mobilkommunikationssystems unter Verwendung eines ersten Teils (141) von Funkressourcen aus einem Pool (140) von Funkressourcen des Mobilkoinmunikationssystems;
Empfangen einer Information über eine Identifikation und einer Information über eine Zugreifbarkeit des zweiten Basisstation-Sende-Empfangs-Geräts (200);
Steuern des ersten Teils (141) von Funkressourcen;
Bestimmen eines zweiten Teils (142) von Funkressourcen basierend auf dem Pool (140) von Funkressourcen, der Information über die Identifikation und der Information über die Zugreifbarkeit, wobei der zweite Teil (142) von Funkressourcen derart ist, dass die gegenseitige Störung zwischen dem zweiten Basisstation-Sende-Empfangs-Gerät (200), das den zweiten Teil von Funkressourcen nutzt, und dem Basisstation-Sende-Empfangs-Gerät (100), das den ersten Teil von Funkressourcen verwendet, verringert ist; und
Übermitteln einer Information über den zweiten Teil (142) von Funkressourcen an das zweite Basisstation-Sende-Empfangs-Gerät (200).

8. Computerprogramm mit einem Programmcode zum Durchführen des Verfahrens gemäß Anspruch 7, wenn das Computerprogramm auf einem Computer oder Prozessor abläuft.

9. Ein Basisstation-Sende-Empfangs-Gerät (200) zum Wirksamsein in einem Mobilkommunikationssystem, mit folgenden Merkmalen:
einer Funkschnittstelle (210), die angepasst ist zum Aufweisen eines ersten Abdeckungsbereichs (212), der durch einen zweiten Abdeckungsbereich (112) eines anderen Basisstation-Sende-Empfangs-Geräts (100) umgeben ist, wobei die Funkschnittstelle (210) ferner angepasst ist zum Kommunizieren mit dem Mobilkommunikationssystem unter Verwendung eines Teils (242) von Funkressourcen aus einem Pool (240) von Funkressourcen des Mobilkommunikationssystems;
einer Netzwerkschnittstelle (220), die angepasst ist zum Empfangen einer Information über eine Identität eines Netzwerkknotens und einer Information über eine Funkressourcennutzung; und
einer Steuerung (230), die angepasst ist zum Steuern des Teils (242) von Funkressourcen basierend auf der Information über die Identität des Netzwerkknotens, der Information über die Funkressourcennutzung und dem Pool (240) von Funkressourcen.

10. Basisstation-Sende-Empfangs-Gerät (200) gemäß Anspruch 9, bei dem die Steuerung (230) angepasst ist zum Steuern des Teils (242) derart, dass, falls die Information über die Identität dem Basisstation-Sende-Empfangs-Gerät (200) zugeordnet ist und ferner eine Angabe aufweist, dass dieselbe von dem anderen Basisstation-Sende-Empfangs-Gerät (100) stammt, der Teil (242) derart gesteuert wird, dass eine gegenseitige Störung zwischen dem anderen Basisstation-Sende-Empfangs-Gerät (100), das Funkressourcen gemäß der Funkressourcennutzung verwendet, und dem Basisstation-Sende-Empfangs-Gerät (200), das den Teil (242) von Funkressourcen verwendet, verringert ist.

11. Das Basisstation-Sende-Empfangs-Gerät (200) gemäß Anspruch 9, bei dem die Steuerung (230) angepasst ist zum Steuern des Teils (242) derart, dass, falls die Information über die Identität einem unterschiedlichen Basisstation-Sende-Empfangs-Gerät zugeordnet ist, wobei das unterschiedliche Basisstation-Sende-Empfangs-Gerät sich von dem anderen Basisstation-Sende-Empfangs-Gerät (100) unterscheidet und ferner eine Angabe umfasst, dass dieselbe von dem anderen Basisstation-Sende-Empfangs-Gerät (100) stammt, der Teil (242) derart gesteuert wird, dass eine gegenseitige Störung zwischen dem anderen Basisstation-Sende-Empfangs-Gerät (100), das die Funkressourcen gemäß der Funkressourcennutzung verwendet, und dem Basisstation-Sende-Empfangs-Gerät (200), das den Teil (242) von Funkressourcen nutzt, reduziert ist.

12. Basisstation-Sende-Empfangs-Gerät (200) gemäß einem der Ansprüche 9 bis 11, bei dem die Steuerung (230) angepasst ist zum Bestimmen eines Maßes einer Dämpfung, eines räumlichen Abstands oder eines Funkabstands zwischen dem Basisstation-Sende-Empfangs-Gerät (200) und dem anderen Basisstation-Sende-Empfangs-Gerät (100), und wobei die Steuerung (230) angepasst ist zum Steuern des Teils (242) basierend auf dem Maß einer Dämpfung, eines räumlichen Abstands oder eines Funkabstands.

13. Basisstation-Sende-Empfangs-Gerät (200) gemäß Anspruch 12, bei dem die Steuerung (230) angepasst ist zum Bestimmen eines Nahbereichs und/oder eines Fernbereichs zwischen dem Basisstation-Sende-Empfangs-Gerät (200) und dem anderen Basisstation-Sende-Empfangs-Gerät (100) basierend auf dem Maß und zum Steuern des Teils (242) von Funkressourcen derart, dass die Funkressourcen, die durch das andere Basisstation-Sende-Empfangs-Gerät (100) bei der Aufwärtsverbindung und/oder Abwärtsverbindung genutzt werden, durch das Basisstation-Sende-Empfangs-Gerät (200) vermieden werden, wenn der Fernbereich bestimmt ist.

14. Basisstation-Sende-Empfangs-Gerät (200) gemäß Anspruch 13, bei dem die Steuerung (230) angepasst ist zum Steuern des Teils (242) von Funkressourcen derart, dass die Funkressourcen, die durch das Basisstation-Sende-Empfangs-Gerät (100) bei der Aufwärtsverbindung und/oder der Abwärtsverbindung genutzt werden, wieder verwendet werden, wenn das Basisstation-Sende-Empfangs-Gerät (200) den Nahbereich bestimmt hat.

15. Verfahren zum Kommunizieren in einem Mobilkommunikationssystem, mit folgenden Schritten:
Betreiben einer Funkschnittstelle, die angepasst ist zum Aufweisen eines ersten Abdeckungsbereichs (212), der durch einen zweiten Abdeckungsbereich (112) eines anderen Basisstation-Sende-Empfangs-Geräts (100) umgeben ist;
Kommunizieren mit dem Mobilkommunikationssystem unter Verwendung eines Teils (242) der Funkressourcen aus einem Pool (240) von Funkressourcen des Mobilkommunikationssystems;
Empfangen einer Information über eine Identität eines Netzwerkknotens und einer Information über eine Funkressourcennutzung; und
Steuern des Teils (242) von Funkressourcen basierend auf der Information über die Identität des Netzwerkknotens, der Information über die Funkressourcennutzung und dem Pool von Funkressourcen.

16. Computerprogramm mit einem Programmcode zum Durchführen des Verfahrens gemäß Anspruch 15, wenn der Programmcode auf einem Computer oder Prozessor abläuft.

## Revendications

1. Emetteur-récepteur de station de base (100) destiné à être opérationnel dans un système de communication mobile, comprenant:
une interface de radiocommunication (110) adaptée pour présenter une première zone de couverture (112) entourant une deuxième zone de couverture (212) d'un deuxième émetteur-récepteur de station de base (200);
une unité de communication (120) adaptée pour communiquer dans le système de communication mobile à l'aide de l'interface de radiocommunication (110) et une première partie (141) des ressources de radiocommunication d'un groupe (140) de ressources de radiocommunication du système de communication mobile, l'unité de communication (120) étant par ailleurs adaptée pour recevoir une information sur une identification et une information sur une accessibilité du deuxième émetteur-récepteur de station de base (200);
un contrôleur (130) adapté pour commander la première partie (141) des ressources de radiocommunication et pour déterminer une deuxième partie (142) des ressources de radiocommunication sur base du groupe (140) de ressources de radiocommunication, de l'information sur l'identification et de l'information sur l'accessibilité, la deuxième partie (142) des ressources de radiocommunication étant telle que soit réduite une interférence mutuelle entre le deuxième émetteur-récepteur de station de base (200) utilisant la deuxième partie (142) des ressources de radiocommunication et l'émetteur-récepteur de station de base (100) utilisant la première partie (141) des ressources de radiocommunication,
dans lequel l'unité de communication (120) est par ailleurs adaptée pour communiquer au deuxième émetteur-récepteur de station de base (200) une information sur la première partie (141) et/ou la deuxième partie (142) des ressources de radiocommunication.

2. Emetteur-récepteur de station de base (100) selon la revendication 1, comprenant par ailleurs une interface de réseau pour communiquer avec le deuxième émetteur-récepteur de station de base (200) et dans lequel l'unité de communication (120) est adaptée pour communiquer au deuxième émetteur-récepteur de station de base (200) l'information sur la première partie (141) et/ou la deuxième partie (142) des ressources de radiocommunication par l'intermédiaire de l'interface de réseau sur base de l'information sur l'identification.

3. Emetteur-récepteur de station de base (100) selon l'une des revendications 1 ou 2, dans lequel le contrôleur (130) est adapté pour commander la première partie (141) et la deuxième partie (142) des ressources de radiocommunication de manière répétitive ou continue.

4. Emetteur-récepteur de station de base (100) selon l'une des revendications 1 à 3, dans lequel l'unité de communication (120) est adaptée pour recevoir l'information, par l'intermédiaire de l'interface de radiocommunication (110), d'un terminal mobile dans le système de communication mobile.

5. Emetteur-récepteur de station de base (100) selon l'une des revendications 1 à 4, dans lequel l'unité de communication (120) est adaptée pour recevoir une autre information sur une identification et une autre information sur une accessibilité d'un troisième émetteur-récepteur de station de base, le troisième émetteur-récepteur de station de base présentant une zone de couverture entourée par la zone de couverture (112) de l'interface de radiocommunication (110) et dans lequel le contrôleur (130) est adapté pour déterminer une troisième partie des ressources de radiocommunication sur base du groupe (140) de ressources de radiocommunication, de l'autre information sur l'identification et de l'information sur l'accessibilité, la troisième partie des ressources de radiocommunication étant telle que soit réduite une interférence mutuelle entre la troisième station de base utilisant la troisième partie des ressources de radiocommunication et l'émetteur-récepteur de station de base (100) utilisant la première partie (141) des ressources de radiocommunication, et dans lequel l'unité de communication (120) est par ailleurs adaptée pour communiquer au troisième émetteur-récepteur de station de base une information sur la troisième partie des ressources de radiocommunication.

6. Emetteur-récepteur de station de base (100) selon l'une des revendications 1 à 5, dans lequel l'unité de communication (120) est adaptée pour utiliser la première partie pour transmettre l'information à un terminal mobile.

7. Procédé pour communiquer dans un système de communication mobile, comprenant les étapes consistant à:
faire fonctionner une interface de radiocommunication (110) présentant la première zone de couverture (112) et entourant une deuxième zone de couverture (212) d'un deuxième émetteur-récepteur de station de base (200);
communiquer dans un système de communication mobile à l'aide d'une première partie (141) des ressources de radiocommunication d'un groupe (140) de ressources de radiocommunication du système de communication mobile;
recevoir une information sur une identification et une information sur une accessibilité du deuxième émetteur-récepteur de station de base (200);
commander la première partie (141) des ressources de radiocommunication;
déterminer une deuxième partie (142) des ressources de radiocommunication sur base du groupe (140) de ressources de radiocommunication, de l'information sur l'identification et de l'information sur l'accessibilité, la deuxième partie (142) des ressources de radiocommunication étant telle que soit réduite l'interférence mutuelle entre le deuxième émetteur-récepteur de station de base (200) utilisant la deuxième partie des ressources de radiocommunication et l'émetteur-récepteur de station de base (100) utilisant la première partie des ressources de radiocommunication; et
communiquer une information sur la deuxième partie (142) des ressources de radiocommunication au deuxième émetteur-récepteur de station de base (200).

8. Programme d'ordinateur ayant un code de programme pour réaliser le procédé selon la revendication 7 lorsque le programme d'ordinateur est exécuté sur un ordinateur ou un processeur.

9. Emetteur-récepteur de station de base (200) destiné à être opérationnel dans un système de communication mobile, comprenant:
une interface de radiocommunication (210) adaptée pour présenter une première zone de couverture (212) entourée d'une deuxième zone de couverture (112) d'un autre émetteur-récepteur de station de base (100), l'interface de radiocommunication (210) étant par ailleurs adaptée pour communiquer avec le système de communication mobile à l'aide d'une partie (242) des ressources de radiocommunication d'un groupe (240) de ressources de radiocommunication du système de communication mobile;
une interface de réseau (220) adaptée pour recevoir une information sur une identité d'un noeud de réseau et une information sur une utilisation de ressources de radiocommunication; et
un contrôleur (230) adapté pour commander la partie (242) des ressources de radiocommunication sur base de l'information sur l'identité du noeud de réseau, de l'information sur l'utilisation de ressources de radiocommunication et du groupe (240) de ressources de radiocommunication.

10. Emetteur-récepteur de station de base (200) selon la revendication 9, dans lequel le contrôleur (230) est adapté pour commander la partie (242) de sorte que si l'information sur l'identité est associée à l'émetteur-récepteur de station de base (200) et comprend par ailleurs une indication qu'elle est issue de l'autre émetteur-récepteur de station de base (100), la partie (242) est commandée de sorte que soit réduite l'interférence mutuelle entre l'autre émetteur-récepteur de station de base (100) utilisant des ressources de radiocommunication selon l'utilisation de ressources de radiocommunication et l'émetteur-récepteur de station de base (200) utilisant la partie (242) des ressources de radiocommunication.

11. Emetteur-récepteur de station de base (200) selon la revendication 9, dans lequel le contrôleur (230) est adapté pour commander la partie (242) de sorte que, si l'information sur l'identité est associée à un émetteur-récepteur de station de base différent, l'émetteur-récepteur de station de base différent étant différent de l'autre émetteur-récepteur de station de base (100), et comprend par ailleurs une indication qu'elle est issue de l'autre émetteur-récepteur de station de base (100), la partie (242) est commandée de sorte que soit réduite une interférence mutuelle entre l'autre émetteur-récepteur de station de base (100) utilisant des ressources de radiocommunication selon l'utilisation de ressources de radiocommunication et l'émetteur-récepteur de station de base (200) utilisant la partie (242) des ressources de radiocommunication.

12. Emetteur-récepteur de station de base (200) selon l'une des revendications 9 à 11, dans lequel le contrôleur (230) est adapté pour déterminer une mesure relative à une atténuation, une distance spatiale ou une distance radioélectrique entre le émetteur-récepteur de station de base (200) et l'autre émetteur-récepteur de station de base (100) et dans lequel le contrôleur (230) est adapté pour commander la partie (242) sur base de la mesure relative à une atténuation, d'une distance spatiale ou d'une distance radioélectrique.

13. Emetteur-récepteur de station de base (200) selon la revendication 12, dans lequel le contrôleur (230) est adapté pour déterminer une plage rapprochée et/ou une plage distante entre l'émetteur-récepteur de station de base (200) et l'autre émetteur-récepteur de station de base (100) sur base de la mesure et pour commander la partie (242) des ressources de radiocommunication de sorte que les ressources de radiocommunication utilisées par l'autre émetteur-récepteur de station de base (100) dans la liaison ascendante et/ou la liaison descendante soient évitées par l'émetteur-récepteur de station de base (200) lorsque la plage éloignée est déterminée.

14. Emetteur-récepteur de station de base (200) selon la revendication 13, dans lequel le contrôleur (230) est adapté pour commander la partie (242) des ressources de radiocommunication de sorte que les ressources de radiocommunication utilisées par l'émetteur-récepteur de station de base (100) dans la liaison ascendante et/ou la liaison descendante soient réutilisées lorsque l'émetteur-récepteur de station de base (200) a déterminé la plage rapprochée.

15. Procédé pour communiquer dans un système de communication mobile, comprenant les étapes consistant à:
faire fonctionner une interface de radiocommunication adaptée pour présenter une première zone de couverture (212) entourée d'une deuxième zone de couverture (112) d'un autre émetteur-récepteur de station de base (100);
communiquer avec le système de communication mobile à l'aide d'une partie (242) des ressources de radiocommunication d'un groupe (240) de ressources de radiocommunication du système de communication mobile;
recevoir une information sur une identité d'un noeud de réseau et une information sur une utilisation de ressources de radiocommunication; et
commander la partie (242) des ressources de radiocommunication sur base de l'information sur l'identité du noeud de réseau, de l'information sur l'utilisation de ressources de radiocommunication et du groupe de ressources de radiocommunication.

16. Programme d'ordinateur ayant un code de programme pour réaliser le procédé selon la revendication 15 lorsque le code de programme est exécuté sur un ordinateur ou un processeur.
